# EUROPÄISCHE PATENTANMELDUNG

(11) **EP 1 225 774 A1**
(43) Veröffentlichungstag der Anmeldung: **24.07.2002**
(21) Anmeldenummer: 01101467.7
(22) Anmeldetag: 23.01.2001
(51) Int. Cl.: H04Q 7/32

(54) **Mobiltelefon mit einer Schnittstelle für ein Teilnehmer-Kennungs-Modul und Verfahren zur Legitimation einer Benutzung eines Mobiltelefons**

(71) Anmelder: SIEMENS AKTIENGESELLSCHAFT, 80333 München (DE)
(72) Erfinder: Neumann, Peter, Dr., 81739 München (DE)

(57) **Zusammenfassung**

Die Erfindung betrifft ein Mobiltelefon mit einer Schnittstelle für Teilnehmer-Kennungs-Modul (2), in dem eine Identitätsinformation gespeichert ist. Das Mobiltelefon weist eine Speichereinrichtung (5) zur Speicherung von Identifikationsinformation auf. Dabei ist die Speichereinrichtung (5) des Mobiltelefons so ausgeführt, um mehrere Identifikationsinformationen zu speichern, wobei weiterhin eine Vergleichereinrichtung (3) vorgesehen ist, um die Identitätsinformation mit den in der Speichereinrichtung (5) gespeicherten Identifikationsinformationen zu vergleichen. Gemäß dem erfindungsgemäßen Verfahren wir ein Benutzer zur Benutzung eines Mobiltelefons legitimiert, indem zunächst eine Identitätsinformation aus dem Teilnehmer-Kennungs-Modul (2) ausgelesen wird, dieser mit den in einer Speichereinrichtung (5) gespeicherten Identifikationsinformation verglichen wird und eine Benutzung des Mobiltelefons nur zugelassen wird, wenn die aus dem Teilnehmer-Kennungs-Modul ausgelesenen Identitätsinformationen mit der in der Speichereinrichtung (5) gespeicherten Identifikationsinformationen übereinstimmt.

## Beschreibung

Mobiltelefon mit einer Schnittstelle für ein Teilnehmer-Kennungs-Modul und Verfahren zur Legitimation einer Benutzung eines Mobiltelefons

Die Erfindung betrifft ein Mobiltelefon mit einer Schnittstelle für ein Teilnehmer-Kennungs-Moduls, in dem eine Identitätsinformation gespeichert ist und ein Verfahren zur Legitimation einer Benutzung eines Mobiltelefons durch ein Teilnehmer-Kennungs-Modul.

Mobiltelefone werden üblicherweise durch ein Teilnehmer-Kennungs-Modul gesteuert. Dieses Teilnehmer-Kennungs-Modul ist üblicherweise in Form einer Chip-Karte ausgebildet, welche entfernbar im Mobiltelefon angeordnet ist. Das Teilnehmer-Kennungs-Modul dient unter anderem dazu, einer berechtigten Person Zugang zu einem Mobilfunknetz zu gewähren und eine Gebührenabrechnung zu ermöglichen. Zu diesem Zweck enthält das Teilnehmer-Kennungs-Modul eine Identitätsinformation, mit welcher der Benutzer in dem Mobilfunknetz identifiziert werden kann. Der Identitätsinformation ist üblicherweise ein Abrechnungskonto zugeordnet, über das die Gebührenabrechnung abgewickelt wird.

Insbesondere bei der Doppelnutzung (z.B. dienstliche und private Nutzung) eines Mobiltelefons ist es bisher üblich, zwei Teilnehmer-Kennungs-Module zu verwenden, um z.B. die Gebührenabrechnung für dienstliche und private Gespräche über getrennte Abrechnungskonten durchzuführen.

Aus Gründen der Sicherheit können Mobiltelefone so betrieben werden, dass es nur mit einem für das Gerät zugelassenen Teilnehmer-Kennungs-Modul benutzt werden kann. Eine missbräuchliche Nutzung, wie sie beispielsweise vorliegt, wenn sich eine dritte Person das Mobiltelefon aneignet und dieses mit einer weiteren, z.B. seiner eigenen Karte, betreiben will, ist dann ausgeschlossen, da das Mobiltelefon nur für die Benutzung mit dem zugelassenen Teilnehmer-Kennungs-Modul vorgesehen ist. Das Mobiltelefon lässt eine Benutzung mit einem bestimmten Teilnehmer-Kennungs-Modul zu, indem eine in dem Teilnehmer-Kennungs-Modul gespeicherte Identitätsinformation in das Mobiltelefon ausgelesen wird, und diese dort in einer dafür vorgesehenen Speichereinrichtung als Identifikationsinformation abgespeichert wird.

Beim Einschalten des Mobiltelefons wird zunächst die Identitätsinformation aus dem Teilnehmer-Kennungs-Modul ausgelesen und mit der in der Speichereinrichtung abgelegten Identifikationsinformation verglichen. Weichen beide voneinander ab, so wird der Benutzer aufgefordert, einen Gerätecode einzugeben. Der Gerätecode ist spezifisch für das Mobiltelefon und nur dem Eigentümer des Mobiltelefons bekannt. Auf diese Weise kann der Eigentümer des Mobiltelefons verschiedenen Teilnehmer-Kennungs-Module mit seinem Mobiltelefon nutzen, in dem er nach jedem Wechsel des Teilnehmer-Kennungs-Moduls den Gerätecode eingibt.

Es ist Aufgabe der Erfindung, ein Mobiltelefon und ein Verfahren zur Verfügung zu stellen, um ein Mobiltelefon auf einfache Weise mit zwei oder mehreren Teilnehmer-Kennungs-Modulen zu betreiben.

Diese Aufgabe wird durch das Mobiltelefon nach Anspruch 1 und das Verfahren nach Anspruch 4 gelöst. Weitere vorteilhafte Ausgestaltungen der Erfindung sind in den abhängigen Ansprüchen angegeben.

Erfindungsgemäß ist ein Mobiltelefon mit einer Schnittstelle für ein Teilnehmer-Kennungs-Modul vorgesehen, in dem eine Identitätsinformation gespeichert ist. Das Mobiltelefon weist weiterhin eine Speichereinrichtung zur Speicherung von Identifikationsinformationen auf. Die Speichereinrichtung des Mobiltelefons ist so ausgeführt, um mehrere Identifikationsinformationen zu speichern. Weiterhin ist eine Vergleichereinrichtung vorgesehen, um die Identitätsinformation mit den in der Speichereinrichtung gespeicherten Identifikationsinformationen zu vergleichen.

Das erfindungsgemäße Mobiltelefon hat den Vorteil, dass mehrere Teilnehmer-Kennungs-Module, z.B. SIM-Module für die Verwendung mit dem Mobiltelefon zugelassen sein können, in dem die entsprechende Identifikationsinformation in der Speichereinrichtung gespeichert wird. Üblicherweise weist ein Mobiltelefon eine Sicherheitsvorrichtung auf, die so ausgelegt ist, dass der Betrieb des Mobiltelefons nur mit einem Teilnehmer-Kennungs-Modul zugelassen wird. Wird das Teilnehmer-Kennungs-Modul in dem Mobiltelefon gegen ein anderes Teilnehmer-Kennungs-Modul ausgewechselt, so muss der Benutzer nach dem Einschalten des Mobiltelefons üblicherweise einen Gerätecode eingeben, mit dem sich der Benutzer als Eigentümer des Mobiltelefons identifiziert. Das Eingeben des Gerätecodes ist zeitaufwendig, insbesondere dann, wenn der Eigentümer des Mobiltelefons zwei oder mehr Teilnehmer-Kennungs-Module mit dem Mobiltelefon betreiben will.

Erfindungsgemäß ist nun vorgesehen, dass gemäß einer Funktion die mit dem Mobiltelefon zu betreibenden Teilnehmer-Kennungs-Module für das Mobiltelefon zugelassen sind, indem die Teilnehmer-Kennungs-Module sich mit einer Identitätsinformation identifizieren, die in einer Speichereinrichtung des Mobiltelefons als Identifikationsinformation abgelegt sind. Bei mehreren Teilnehmer-Kennungs-Modulen werden in der Speichereinrichtung mehrere Identifikationsinformationen gespeichert. Beim Einschalten des Mobiltelefons wird dann überprüft, ob die Identitätsinformation des angeschlossenen Teilnehmer-Kennungs-Moduls mit der Identifikationsinformation in der Speichereinrichtung übereinstimmt. Ist die Identitätsinformation des Teilnehmer-Kennungs-Moduls in der Speichereinrichtung vorhanden, so wird die Benutzung des Mobiltelefons zugelassen. Auf diese Weise ist es vorteilhaft möglich, dass ein Benutzer mehrere Teilnehmer-Kennungs-Module mit einem Mobiltelefon verwenden kann, ohne bei jedem Wechsel des Teilnehmer-Kennungs-Moduls erneut den Gerätecode des Mobiltelefons eingeben zu müssen.

Stimmt bei dem Vergleichen die aus dem Teilnehmer-Kennungs-Modul ausgelesene Identitätsinformation mit der in der Speichereinrichtung des Mobiltelefons gespeicherten Identifikationsinformation nicht überein, so wird der Benutzer durch eine Abfrageeinrichtung aufgefordert, einen Gerätecode einzugeben. Nur wenn der Gerätecode mit dem im Mobiltelefon gespeicherten Gerätecode übereinstimmt, wird eine Benutzung des Mobiltelefons zugelassen.

Gemäß einer besonderen Funktion kann vorgesehen sein, dass das aktuell in das Mobiltelefon eingesetzte Teilnehmer-Kennungs-Modul, das zuvor durch Eingabe eines Gerätecodes für die Benutzung mit dem Mobiltelefon zugelassen wurde, weil es noch nicht in der Speichereinrichtung registriert wurde, dauerhaft für die Benutzung in dem Mobiltelefon zugelassen werden kann. Dazu wird nach Aufrufen der dafür vorgegebenen Funktion die Identitätsinformation als Identifikationsinformation in der Speichereinrichtung des Mobiltelefons gespeichert. Dies hat den Vorteil, dass eine nahezu beliebige, nur durch die Kapazität der Speichereinrichtung begrenzte Anzahl von Teilnehmer-Kennungs-Modulen mit dem Mobiltelefon betrieben werden können. Gleichzeitig bleibt der Diebstahlschutz für nicht zugelassene Teilnehmer-Kennungs-Module aktiv.

Die Erfindung wird im folgenden anhand der beigefügten Zeichnungen näher erläutert. Es zeigen:
- Fig. 1: ein Blockschaltbild des erfindungsgemäßen Mobiltelefons; und
- Fig. 2: den Verfahrensablauf des erfindungsgemäßen Verfahrens.

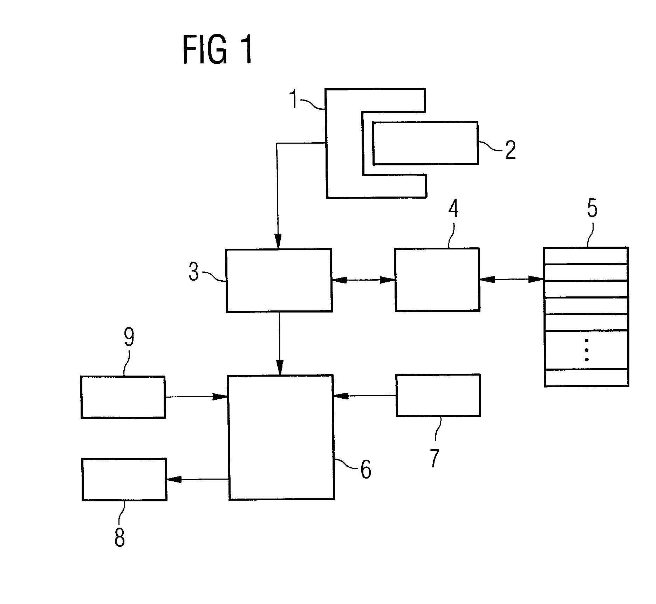

Fig. 1 zeigt ein Blockschaltbild eines erfindungsgemäßen Mobiltelefons mit einer Halterung 1 für eine SIM-Karte 2. Die SIM-Karte 2 ist elektrisch über die Halterung 1 mit einer Vergleichereinrichtung 3 verbunden. Die Vergleichereinrichtung 3 kann über eine Verschlüsselungseinheit 4 auf eine Speichereinrichtung 5 zugreifen.

Beim Einschalten des Mobiltelefons wird eine Identitätsinformation aus der SIM-Karte 2 in die Vergleichereinrichtung 3 ausgelesen. Die Vergleichereinrichtung 3 liest dann nacheinander die in der Speichereinrichtung 5 abgespeicherten Identifikationsinformationen aus und vergleicht diese mit der aus der SIM-Karte 2 ausgelesenen Identitätsinformation. Stellt die Vergleichereinrichtung 3 fest, dass die Identitätsinformation mit einer der in der Speichereinrichtung 5 abgespeicherten Identifikationsinformationen nicht übereinstimmt, so gibt diese ein Signal an die mit der Vergleichereinrichtung 3 verbundene Abfrageeinrichtung 6, die dadurch angewiesen wird, den Gerätecode abzufragen.

Die Abfragevorrichtung 6 fragt je nach Ergebnis des in der Vergleichereinrichtung 3 durchgeführten Vergleichs einen in einem Gerätecodespeicher 7 gespeicherten Gerätecode ab, indem die Abfragevorrichtung 6 eine Frage auf einer Anzeigevorrichtung 8 an den Benutzer ausgibt, dass dieser nun den Gerätecode für das Mobiltelefon eingeben soll. Der Benutzer gibt daraufhin den Gerätecode z. B. über eine Tastatur 9 oder per Spracheingabe o.ä. ein. Die Abfragevorrichtung 6 vergleicht den im Mobiltelefon gespeicherten Gerätecode mit dem eingegebenen Gerätecode und ermöglicht dem Benutzer bei Übereinstimmung die Benutzung des Mobiltelefons.

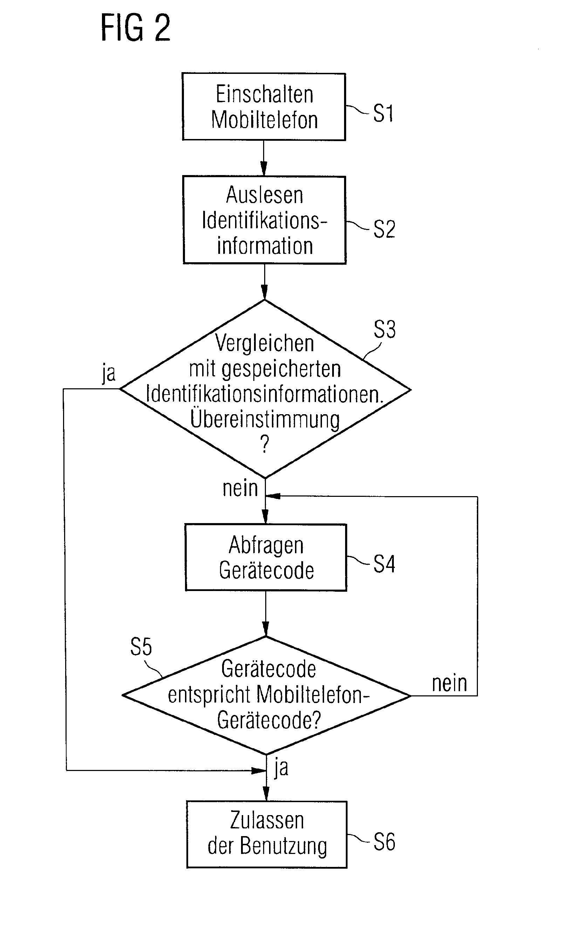

Fig. 2 zeigt einen Verfahrensablauf zur Legitimation der Benutzung des Mobiltelefons durch ein Teilnehmer-Kennungs-Modul 2. Nach dem Einschalten des Mobiltelefons (Schritt S1) wird die Identitätsinformation aus der SIM-Karte 2 in die Vergleichereinrichtung 3 ausgelesen (Schritt S2). Dort wird die ausgelesene Identitätsinformation jeweils mit den in der Speichereinrichtung 5 gespeicherten Identifikationsinformationen verglichen (Schritt S3) und bei Übereinstimmung mit einer der in der Speichereinrichtung 5 gespeicherten Identifikationsinformationen die Benutzung des Mobiltelefons durch den Benutzer zugelassen (Schritt S6).

Stimmt keine der in der Speichereinrichtung gespeicherten Identifikationsinformationen mit der ausgelesenen Identitätsinformation überein, so wird der Benutzer durch die Abfrageeinrichtung 6 (Schritt S4) aufgefordert, den für das Mobiltelefon spezifischen Gerätecode einzugeben (Schritt S5). Erst wenn der Benutzer den korrekten Gerätecode für das Mobiltelefon eingegeben hat (Schritt S5), ist er berechtigt, das Mobiltelefon zu benutzen (Schritt S6).

Auf diese Weise ist es möglich, dass ein Benutzer mehrere SIM-Karten 2 mit einem Mobiltelefon betreiben kann, ohne dass er auf die gewohnten Diebstahlsschutzmaßnahmen verzichten muss. Diese garantieren dem Benutzer eines Mobiltelefons, dass andere, nicht für die Benutzung mit dem jeweiligen Mobiltelefon zugelassenen SIM-Karten nur verwendet werden können, wenn dem Benutzer der Gerätecode bekannt ist. Dieser Gerätecode wird jedoch üblicherweise an einem vom Mobiltelefon getrennten sicheren Ort aufbewahrt.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausgestaltungen wesentlich sein.

## Patentansprüche

1. Mobiltelefon mit einer Schnittstelle für ein Teilnehmer-Kennungs-Modul (2), in dem eine Identitätsinformation gespeichert ist, und mit einer Speichereinrichtung (5) zur Speicherung von Identifikationsinformationen,
**dadurch gekennzeichnet, dass**
die Speichereinrichtung (5) des Mobiltelefons ausgelegt ist, um mehrere Identifikationsinformationen zu speichern, und dass eine Vergleichereinrichtung (3) vorgesehen ist, um die Identitätsinformation mit den in der Speichereinrichtung (5) gespeicherten Identifikationsinformationen zu vergleichen.

2. Mobiltelefon nach Anspruch 1, **dadurch gekennzeichnet,**
**dass** die Vergleichereinrichtung (3) mit einer Abfragevorrichtung (6) verbunden ist, um von einem Benutzer einen Gerätecode anzufordern, wenn die Vergleichereinrichtung (3) feststellt, dass die Identitätsinformation des Teilnehmer-Kennungs-Moduls (2) nicht in der Speichereinrichtung (3) gespeichert ist.

3. Mobiltelefon nach einem der vorangehenden Ansprüche, **dadurch gekennzeichnet, daß** die Speichereinrichtung (3) mit einer Verschlüsselungseinheit (4) verbunden ist, um Identifikationsinformationen verschlüsselt in der Speichereinrichtung (5) zu speichern.

4. Verfahren zur Legitimation einer Benutzung eines Mobiltelefons durch ein Teilnehmer-Kennungs-Modul (2) mit folgenden Schritten:
a) Anschließen eines Teilnehmer-Kennungs-Moduls (2) an das Mobiltelefon;
b) Auslesen einer Identitätsinformation aus dem Teilnehmer-Kennungs-Modul (2);
c) Vergleichen der ausgelesenen Identitätsinformation mit in einer Speichereinrichtung (5) des Mobiltelefons gespeicherten Identifikationsinformationen;
d) Zulassen der Benutzung des Mobiltelefons bei Übereinstimmung der aus dem Teilnehmer-Kennungs-Modul (2) ausgelesenen Identitätsinformation mit den in der Speichereinrichtung (5) gespeicherten Identifikationsinformationen.

5. Verfahren nach Anspruch 4, **dadurch gekennzeichnet, daß** bei Nicht-Übereinstimmung der aus dem Teilnehmer-Kennungs-Modul (2) ausgelesenen Identitätsinformation mit den in der Speichereinrichtung (5) gespeicherten Identifikationsinformationen durch eine Abfrageeinrichtung (6) ein Gerätecode abgefragt wird, wobei eine Benutzung des Mobiltelefons nur bei Übereinstimmung des abgefragten Gerätecodes mit einem im Mobiltelefon gespeicherten Gerätecode zugelassen wird.

6. Verfahren nach Anspruch 5, **dadurch gekennzeichnet, daß** nach dem Zulassen der Benutzung die Identitätsinformation als Identifikationsinformation in der Speichereinrichtung (5) gespeichert wird.
